Europäisches Patentamt

(19) European Patent Office

Office européen des brevets

(11) Publication number: 0 329 374
A1

## (12) EUROPEAN PATENT APPLICATION

(21) Application number: 89301371.4

(22) Date of filing: 14.02.89

(51) Int. Cl.⁴: E03F 5/16 , B01D 17/032 , E02B 15/04

(30) Priority: 18.02.88 GB 8803822

(43) Date of publication of application:
23.08.89 Bulletin 89/34

(84) Designated Contracting States:
DE ES FR IT NL

(71) Applicant: HOYLE MARINE LTD.
Hoyle Buildings Alfred Road
Wallasey Merseyside L44 7HY(GB)

(72) Inventor: Townsend, Peter
55 Springfield Avenue Newton
West Kirby Wirral Merseyside(GB)

(74) Representative: Gilmour, David Cedric
Franklyn et al
POTTS, KERR & CO. 15 Hamilton Square
Birkenhead Merseyside L41 6BR(GB)

(54) **Apparatus for removing floating liquid pollutants from the surface of water and control system therefor.**

(57) An apparatus for removing floating liquid pollutant (21) from the surface (7) of a body of water (W, 5, 15) comprising a receptacle or container (2; 1A, 29, 30) which, in use, is to be at least partially immersed in the body of water with the partially immersed portion of the container having one or more passages (4; 10, 11) communicating the interior of said container with the exterior body of water, means (16; 18, 19, 20) for removing floating liquid pollutants (21) from the surface (7) of the body of water externally of the container (2; 1A, 29, 30) and for discharging said so removed floating liquid pollutants (21) into the interior of said container for temporary storage, and means (8; 22-24) for indicating the level of liquid pollutant within the container or means for sensing the level of the surface of liquid within the interior storage space of said container; with said level sensor means (8; 22-24) being located or calibrated or otherwise arranged so as to indicate and/or trnasmit a signal representative of the "head" or difference (H), if any, of said interior surface level above that which would exist when the apparatus is located in its normal position of use in water without there being any surface pollutant.

FIG 4

# APPARATUS FOR REMOVING FLOATING LIQUID POLLUTANTS FROM THE SURFACE OF WATER AND CONTROL SYSTEM THEREFOR

The present invention relates to apparatus (such as a disc skimmer, squeegee/rope mop device, weir skimmer or other like apparatus) for removing floating liquid pollutants (such as oil or other floating chemicals) from the surface of a body of water.

The apparatus has particular use in drainage water treatment systems which have settling tanks or interceptor tanks wherein water, such as surface drainage water, is permitted to flow into the special interceptor tanks prior to flowing to a stream or river and in said interceptor tank where solid debris may settle to the bottom of the tank and other debris including liquid pollutants may rise and float on the surface of the water in the tank. It is important to be able to remove the liquid pollutants at reasonably frequent intervals to prevent build-up of too much of such pollutants on the surface of the liquid and, furthermore, to prevent such from being inadvertently flushed-out of the tank into another drainage system, such as a river or stream, in the event of a heavy surge of liquid passing through the tank as sometimes occurs as the result of heavy rain showers etc. There are various devices such as skimmers for removing oil or other chemical pollutants floating on the surface of water and if such were used continuously, then substantial costs would be incurred and, furthermore, the apparatus would be subject to excessive wear. Furthermore, such apparatus would likely be operating for a major part of the time when there is virtually no surface pollutant floating on the water. The provision of time clocks for operation at regular intervals has been proposed although such would not provide adequate safety to prevent pollutants being flushed into a river where a build-up of surface pollutant has arisen prior to activation of the apparatus and a surge of flood water or the like occurs shortly before such activation.

Furthermore, the on-land storage of the pollutants in tanks requires the construction of additional safety-retaining walls.

It is an object of the present invention to provide an apparatus and control system which will provide a more effective means for removing surface pollutants as they build up on the surface of a body of water.

According to the present invention an apparatus for removing floating liquid pollutant from the surface of a body of water comprises a receptacle or container which, in use, is to be at least partially immersed in the body of water with the partially immersed portion of the container having one or more passages communicating the interior of said container with the exterior body of water, means for removing floating liquid pollutants from the surface of the body of water externally of the container and for discharging said so removed floating liquid pollutants into the interior of said container for temporary storage, and means for detecting the level of the surface of liquid within the interior storage space of said container; with said level detecting means being located or calibrated or otherwise arranged so as to indicate and/or transmit a signal representative of the difference, if any, of said interior surface level above that which would exist when the apparatus is located in its normal position of use in water without there being any surface pollutant.

It is to be appreciated that the present invention utilises the effect that when a floating liquid pollutant is disposed in a container partially immersed in water and having passages communicating with said water, the pollutant in the container floats on the surface of the water at a level higher than the surface of the level of surrounding water because of the lower specific gravity of the floating pollutant, such as oil or other floating chemical, and this results in a "head" within the container above the datum level of the surrounding exterior body of water. This "head" or change in level within the container can be detected and/or measured by said sensor or detecting means which may be of any kind, such as a simple float and lever device or other gauge means, which is such or can be graduated or calibrated to read or indicate the quantity of oil or other pollutant collected and/or to indicate "a full" condition and/or to operate other means, such as a switch, to actuate a pump which in turn will pump away the pollutant from the interior of the container until a certain lower level is again reached.

It will be appreciated that if the surface level sensor simply indicates the level of pollutant within the container such pollutant may be removed manually or by an operator actuating an appropriate removal device and the pollutant may be stored in a tank at the waterside or removed by a tanker. However, where the apparatus is to be automated, a signal such as an electronic signal may be issued or initiated by the sensor means to activate a pump or other pollutant removal means which is arranged and connected so as to remove the floating pollutant from the interior of the container.

It is also intended that the present invention includes within its scope any pollutant surface level sensor means for attachment to a surface pollutant removal apparatus to measure the level of pollutant within said device and is locatable or calibrated or arranged so as to indicate the level of surface pollutant and/or issue a signal representative of the level of surface pollutant within the container part of the apparatus above the datum level comprised by the level of water outside said container in which said container is at least partially immersed and is in communication via at least one passage from the interior of the container.

Instead of a sensor a viewing means such as a level glass or a window in the wall of the container to permit viewing from the exterior may be used.

It is also envisaged that the present invention also includes control means to activate means for removing surface pollutant from the interior of the apparatus when flow of liquid in a supply pipe or other duct leading to said inteceptor tank, reaches a predetermined level with said means comprising a flow meter or level gauge or other device.

It is also considered to be within the scope of the present invention to utilize the apparatus defined generally on page 2 herein, primarily as an alarm device rather than for collecting or recovering oil or other surface pollutant from the water surface. In such embodiment, the liquid level detection means would be adapted or be such as to activate an alarm device. In practice the alarm apparatus or device would be arranged to operate continuously when detection and alarm was required and the apparatus would be suitably miniaturised. For example, the apparatus would preferably be buoyant and be dispensed in use to float and the container is preferably a tube or pipe open at both ends with the lower end disposed or disposable in the water and the upper end to be disposed above the water level and into which suitable continuously operable oil removal means, such as mentioned, would discharge oil in the event of such being present so that the existence of a predetermined head of oil would be detected by suitable liquid level sensor means which would act to operate an alarm or other means.

The invention will be described further, by way of example, with reference to the accompanying drawings, in which:-

Fig. 1 is a schematic perspective view of apparatus for removing liquid surface pollutants and including a disc-skimmer device attached to a container part and forming an embodiment according to the present invention wherein a simple float valve with indicator scale is illustrated;

Fig. 2 is a schematic representation of the head of surface pollutant (H) which can exist in the apparatus according to the invention;

Fig. 3 is a schematic perspective view with components omitted but illustrating a modified communication passage;

Fig. 4 is a schematic elevation of an embodiment of the whole apparatus according to the invention; and

Fig. 5 is a schematic illustration of an alarm apparatus as an embodiment of the invention.

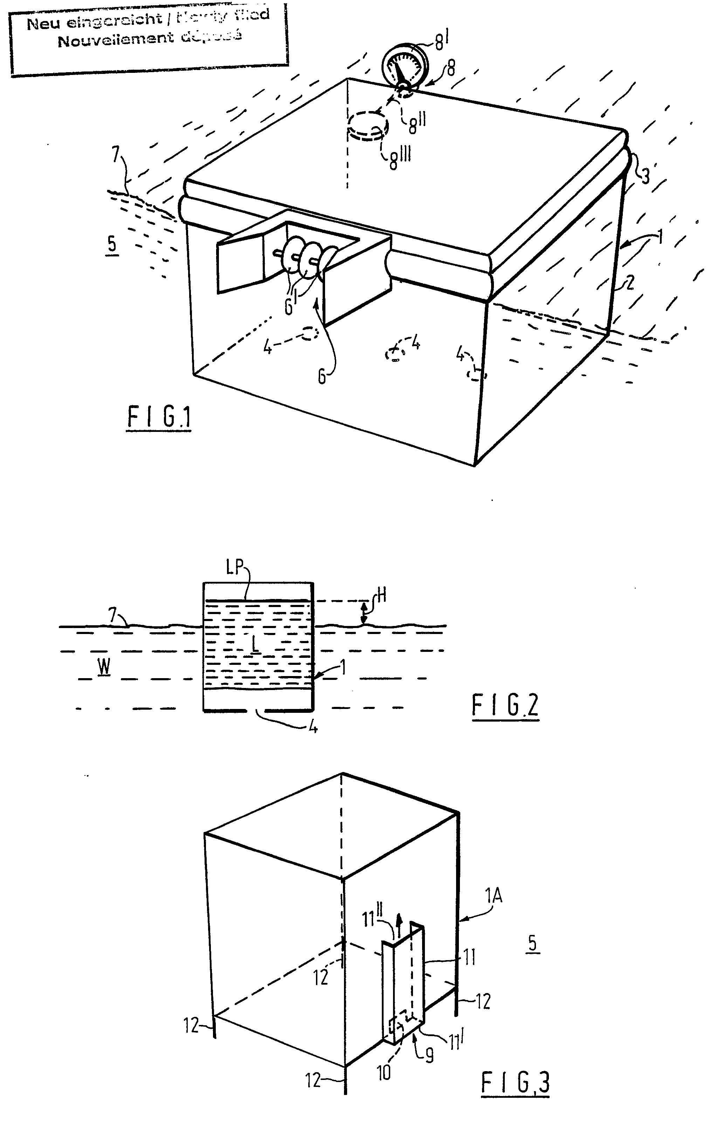

The apparatus illustrated in Fig. 1 comprises a container 1 in the form of a rectangular box 2 which is adapted to float by having suitable buoyancy means such as buoyant collar 3 surrounding at least an upper region thereof, and a plurality of passages 4 (only three shown) in the region of the bottom of the container and communicating with the body of water 5 in which it is to float. A window or boiler glass (now shown) may be provided as indicating means to enable the pollutant in the container to be viewed.

A disc skimming device 6 with drivable rotary discs 6' is generally illustrated for removal of oil or other surface liquid pollutant from the surface 7 of the body or water 5 for discharge into the interior of the container 2. Other surface pollutant devices may alternatively be used, as desired. Furthermore instead of floating in use, the container may be fixed in the water. The skimmer discharges the oil or chemicals into the top of the container 2 gradually displacing the water within the container and filling it with oil.

The lower specific gravity of the oil/chemicals (compared to water), will result in a head building up within the container above the datum of the surrounding outer body of water. This head or change in level within the container can be detected/measured by the simple float and lever device (8)which can be graduated to read the quantity of oil collected or "FULL" condition, and/or operate a switch to activate a pump which in turn will pump away the oil until a certain level is reached again.

By way of example, with an oil pollutant with S.G. 0.85 and with a 1.0m deep tank full of oil this will give approximately 0.17m head to be detected by the sensor means 8.

A liquid level sensor is provided in the form of a float valve 8 has a gauge 8', a lever 8" and a float 8‴ which indicates empty "E" being equivalent to the datum level 7 of the surface of the liquid surrounding the container 2 which is the same as that level which exists when there is no surface floating pollutant in the container whilst the level "F" indicates full which is that level of the surface floating liquid pollutant within the container which is or is considered to be the maximum level LP or amount to be contained therein and thus the range from E to F is representative of the head H of liquid within the container above the level 7 of the surrounding water W in which the container is located.

As mentioned suitable signal means (not shown) may be provided either in place of the visual gauge and/or in addition thereto which will operate at a predetermined level (such as F) to energise pump means (not shown) connected via suitable ducting means to the interior of the container (none of which is shown) to remove the surface pollutant from the interior of container 2 until a lower pollutant surface level such as E (equivalent to 7) is reached whereupon the pump is de-energised by the signal from the control means. It will be appreciated that the sensor means, pumps ducts etc. will be such as to be readily apparent to persons skilled in the art.

The apparatus may sit on the bottom of a tank or other liquid reservoir but preferably will float - especially if there is to be any variation in the level of the water reservoir. Alternatively the apparatus may be disposed juxtaposed a body of water. Preferably not too many or too large holes are provided at the bottom of the container so as to encourage settlement and separation.

Fig. 3 is a schematic perspective view of a modified container 1A and wherein the disc skimming device 6 and liquid sensor 8,8' etc., have been omitted for simplicity but are intended to be provided in some form. The view is provided to illustrate an alternative passage means (9) for communicating the interior of container 1A with the outer body of water 5 instead of the bottom passages 4 of Fig. 1. The passage means 9 in this embodiment comprises a rectangular aperture 10 in the bottom of a side wall of the container which leads into a ducting member 11 provided on the side and closed at its bottom end 11' but open at its upper end 11". This arrangement ensures that should the container 1A become full of pollutant such as oil, which then flows back into body of water 5, the outflow of pollutant is in an upper region and directed towards the surface of the water. This minimizes the danger of the pollutant being entrained in the flow to the outlet for the water body which outlet is normally located in a lower region thereof. In this arrangement, the container 1A is intended to have legs 12 which are supported on the bottom.

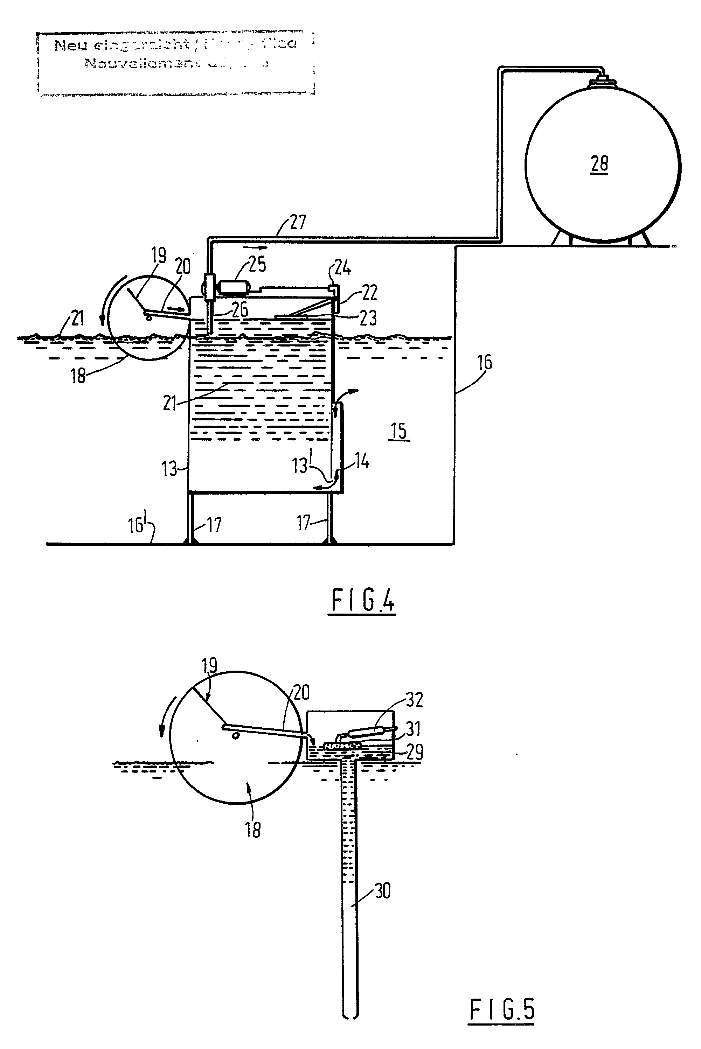

Fig. 4 is a schematic elevation of apparatus forming a further embodiment of the invention and comprises a reservoir in the form of a rectangular tank 13 having an opening 13' in a side wall at the bottom thereof and said opening 13' leading to ducting member 14 (similar to member 11 in Fig. 3) which is closed at its bottom end and open at its upper end to form passage means communicating the interior of tank 13 with the surrounding body of water 15 contained in a settling reservoir or interceptor tank 16. The tank 13 is supported on the bottom 16' of interceptor tank 16 by four legs 17 (only two shown). In an alternative embodiment the tank 13 may be adapted by provision of buoyancy means to float where the level in the interceptor tank varies.

A disc skimming device 18 is illustrated (only one disc shown) and may be of well known type having a scraper 19 and trough 20 which direct oil 21 picked up from the surface of water 15 into the interior of tank 13 via an opening (not shown in detail). Other oil removing devices may be used in place of the disc skimmer 18, such as mentioned previously.

Means for detecting the level of the liquid surface within tank 13 are provided and comprise a float gauge 22 with arm and float 23 which follows the liquid surface - the gauge 22 being calibrated to visually indicate and/or to otherwise indicate the liquid surface level in tank 13 or to operate means upon reaching a predetermined upper level. In the latter respect, an audio and/or visual warning device may be operated. Additionally or separately, the gauge 22 may operate a switch 24 upon a predetermined upper level being reached which will energise a pump 25 including an electric rotor and impeller so as to draw oil through pipe 26 whose lower inlet end is just above the normal water only level in tank 13. Oil 21 is pumped along pipe 27 to an oil storage tank 28 located at the side of interceptor tank 16. Other level detection means may be used instead e.g. a laser or infra-red beam reflective reading device directed on the liquid surface in the tank 13.

Fig. 5 illustrates an alternative embodiment of the invention wherein the apparatus functions as an alarm device to initiate a warning and/or to energise an apparatus for removing oil or like from a liquid surface and such is illustrated in Figs. 1 or 4. The apparatus may be fixed to a reservoir side wall or be adapted to float by buoyant means (not shown). The apparatus comprises a constantly rotating disc skimming device 18 with scraper 19 and trough 20 leading to a receptacle 29 which has a narrow, open bottomed tube 30 depending therefrom and being narrower than receptacle 29 to provide a fast response.

The receptacle 29 contains a float 31 as surface level sensing means and a level switch or like, such as a mercury switch 32, which is arranged and/or adjusted to enable a signal to be sent or electric current to flow to operate an audio visual alarm and/or to operate oil or other surface pollutant removal apparatus (not shown in Fig. 5). The alarm apparatus is smaller than the removal apparatus, may have a single disc and thus use less power and not be too expensive to leave operating continuously.

Alternatively, the sensor means may compare the external surface level with that in the container.

## Claims

1. An apparatus for removing floating liquid pollutant from the surface of a body of water (W,5,15) comprising a container (2;1A,29,30) which, in use, is to be at least partially immersed in the body of water, a lower portion of the container having one or more passages (4;10,11) communicating the interior of said container with the exterior thereof, means (16; 18, 19,20) for removing floating liquid pollutants from the surface of the body of water externally of the container (2; 1A,29,30) and for discharging said so removed floating liquid pollutants into the interior of said container for temporary storage, and sensor means (8;22-24) for sensing the level of the surface of liquid within the interior storage space of said container and being such as to indicate the and/or transmit a signal representative of the "head" or difference (H) , if any, of said interior surface level above that surface externally of the container which would exist when the apparatus is located in its normal position of use in water without there being any surface pollutant.

2. Apparatus as claimed in claim 1, in which said sensor means is a simple float and lever device (8-8'11; 22-24) or other gauge means, which is such, or can be graduated or calibrated to be such, as to read or indicate the quantity of oil or other pollutant collected and/or to indicate "a full" condition and/or to operate other means, such as a switch (24) to actuate a pump (25) which in turn will pump away the pollutant from the interior of the container until a certain lower level is again reached whereupon the pump may be de-activated.

3. Apparatus as claimed in claim 1 or 2 in which the surface level sensor (8; 22, 23, 24) simply indicates the level of pollutant within the container (2,1A, 13) and such pollutant may be removed manually or by an operator actuating an appropriate removal device (25, 26).

4. Apparatus as claimed in any of claims 1 to 3, in which the sensor means (8,22, 23) is such as will issue or initiate a signal, such as an electronic signal, to activate a pump (25) or other pollutant removal means which is arranged and connected so as to remove the floating pollutant from the interior of the container.

5. Apparatus as claimed in any of claims 1 to 4, in which the passage in the container (1A; 13) is an aperture (10, 13') in a wall thereof communicating with ducting means (11, 14) leading upwardly from the aperture (10, 13') to direct any discharged pollutant towards the surface of the body of water.

6. Apparatus as claimed in any of claims 1 to 5, including control means such as a flow meter or level gauge or other device to activate means (25) for removing surface pollutant from the interior of the apparatus when flow of liquid in a supply pipe or other duct leading to the body of water reservoir, such as an interceptor tank, reaches a predetermined rate or level.

7. Apparatus as claimed in any of claims 1 to 6, which, in use, is supported ( by 12 or 17) on the bottom of a tank or other liquid reservoir (16').

8. Apparatus as claimed in any of claims 1 to 6, in which the container (2) is buoyant or adapted to be buoyant (3).

9. Apparatus as claimed in any of claims 1 to 8 in which the passages are holes (4;10) which are of such small size and number as to encourage or at least not act to discourage settlement and separation within the container.

10. Apparatus as claimed in any of claims 1 to 9, in which the pollutant removal means is a disc skimming device (6) with rotary disc(s) (6').

11. An alarm device (Fig. 5) for warning of the presence of floating liquid pollutant, comprising a receptacle or container (29, 30) which, in use, is to be at least partially immersed in the body of water with the partially immersed portion (30) of the container having one or more passages (30') communicating the interior of said container with the exterior body of water, means (18-20) for removing floating liquid pollutants from the surface of the body of water externally of the container and for discharging said so removed floating liquid pollutants into the interior of said container (29, 30) and means (31,32) for detecting the level of the surface of the liquid within the container and adapted to activate an alarm device.

12. A device as claimed in claim 11, in which the container is a tube open at both ends with an enlargement at its upper end and is disposable to float in an upright position.

13. A pollutant surface level sensor means for attachment to or attached to a surface pollutant removal apparatus and capable of measuring the level of pollutant within a vessel or container of said removal apparatus, said sensor means being locatable or calibrated or arranged so as to indicate the level of surface pollutant and/or issue a signal representative of the level of surface pollutant above a datum level.

FIG.1

FIG.2

FIG.3

F I G.4

F I G.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-C- 511 186 (W. PASSAVANT et al.) * Whole document * | 13 | E 03 F 5/16 |
| Y | | 1-4,11 | B 01 D 17/032 |
| A | | 7 | E 02 B 15/04 |
| | --- | | |
| Y | WO-A-8 400 989 (D. JOHANSEN) * Pages 1,2; figure 2 * | 1-4,11 | |
| A | | 8 | |
| | --- | | |
| Y | DE-A-3 612 288 (I. KOSLOW) * Claim 1; column 3, lines 40-62; figure 1 * | 2-4 | |
| A | | 1,6 | |
| | --- | | |
| A | EP-A-0 219 164 (HOOGOVENS GROEP B.V.) * Column 4, line 27 - column 5, line 11; figures 1,2 * | 1,2,4,6 | |
| | --- | | |
| A | EP-A-0 234 031 (V. ARCARI) * Page 4, lines 15-24; figure 1 * | 1,2,10 | |
| | --- | | TECHNICAL FIELDS SEARCHED (Int. Cl.4) |
| A | FR-A-2 424 368 (J.X.M. CHRISTIAN) ----- | | E 03 F E 02 B B 01 D |

The present search report has been drawn up for all claims

| Place of search | Date of completion of the search | Examiner |
|---|---|---|
| THE HAGUE | 26-04-1989 | BIRD,C.J. |